# EUROPÄISCHE PATENTSCHRIFT

(11) **EP 1 712 513 B1**
(45) Veröffentlichungstag und Bekanntmachung des Hinweises auf die Patenterteilung: **17.06.2009**
(21) Anmeldenummer: 06007149.5
(22) Anmeldetag: 04.04.2006
(51) Int. Cl.: B66F 9/075, B62B 3/06, B60K 1/04, H01M 2/10

(54) **Flurförderfahrzeug mit einem Batteriespanner**
Industrial truck with a battery clamping device
Véhicule industriel avec dispositif de fixation de batterie

(30) Priorität: 14.04.2005 DE 102005017303
(43) Veröffentlichungstag der Anmeldung: 18.10.2006
(73) Patentinhaber: STILL GmbH, 22113 Hamburg (DE)
(72) Erfinder: Mittmann, Heribert, 20535 Hamburg (DE)
(74) Vertreter: Geirhos, Johann

(56) Entgegenhaltungen:
- EP-A1- 0 508 248
- EP-A1- 1 205 424
- DE-C1- 19 546 556
- DE-U1- 20 105 883
- DE-U1- 29 918 831

## Beschreibung

Die Erfindung betrifft ein Flurförderzeug mit einem Batteriefach und einem in dem Batteriefach angeordneten Batterieblock, wobei in zumindest einer horizontalen Richtung die Innenabmessung des Batteriefachs größer ist als die Außenabmessung des Batterieblocks, wobei mindestens ein Batteriespanner vorgesehen ist, der in einem Zwischenraum zwischen einer Innenwand des Batteriefachs und einer Außenwand des Batterieblocks angeordnet ist.

Flurförderzeuge der genannten Art sind häufig als Gegengewichtsgabelstapler ausgeführt, die eine seitliche Rahmenöffnung aufweisen. Zur Durchführung eines Batteriewechsels kann der Batterieblock durch diese seitliche Öffnung des Fahrzeugrahmens des Flurförderzeugs aus dem Batteriefach heraus und in das Batteriefach hinein bewegt werden. Das Batteriefach befindet sich vollständig im Inneren des Flurförderzeugs. In frontaler und rückwärtiger Richtung des Flurförderzeugs - also senkrecht zur Bewegungsrichtung des Batterieblocks während eines Batteriewechsels - ist das Batteriefach durch mit dem Fahrzeugrahmen verbundene Bauteile begrenzt, welche die Innenwand des Batteriefachs bilden.

Um während des Batteriewechsels ein problemloses Bewegen des Batterieblocks relativ zum Batteriefach zu ermöglichen, ist die Innenabmessung des Batteriefachs in Längsrichtung des Flurförderzeugs, also der Abstand der flurförderzeugfrontseitigen zur flurförderzeugheckseitigen Innenwand des Batteriefachs größer, als die Außenabmessung des Batterieblocks in der gleichen Richtung.

Während des Betriebs des Flurförderzeugs ist jedoch aus Sicherheitsgründen jede Bewegung des Batteriefachs innerhalb des Batterieblocks zu verhindern. Es ist bekannt, Befestigungsvorrichtungen für den innerhalb des Batteriefachs befindlichen Batterieblock vorzusehen. Im Stand der Technik bekannte Befestigungsvorrichtungen sind häufig aufwändig in der Herstellung, aufwändig in der Bedienung oder erfordern die Einhaltung von engen Fertigungstoleranzen.

Aus der DE 201 05 883 U1 ist ein Flurförderzeug mit einem in einem Batteriefach angeordneten Batterieblock bekannt, bei dem die Innenabmessungen des Batteriefachs in horizontaler Richtung größer als die Außenabmessungen des Batterieblocks ist. Um den Batterieblock in dem Batteriefach zu fixieren, ist eine Klapphaube vorgesehen, die einen Seitenwandabschnitt und einen Deckelbereich umfasst. Die Klapphaube ist mit dem Seitenwandabschnitt an einer Trennwand des Batteriefachs schwenkbar befestigt und mit von elastischen Puffern gebildeten Andrückelementen versehen, die durch Öffnungen in der Trennwand in der Schließstellung der Klapphaube mit dem Batterieblock zu dessen Fixierung in Verbindung gelangen.

Der vorliegenden Erfindung liegt daher die Aufgabe zugrunde, ein gattungsgemäßes Flurförderzeug zur Verfügung zu stellen, das eine einfach aufgebaute und einfach zu bedienende Vorrichtung zum Festlegen des Batterieblocks innerhalb des Batteriefachs aufweist.

Diese Aufgabe wird erfindungsgemäß dadurch gelöst, dass der Batteriespanner folgende Elemente aufweist:
- ein bewegliches Verbindungselement, mit dem eine zur Übertragung von Druckkräften geeignete mechanische Verbindung zwischen der Innenwand des Batteriefachs und der Außenwand des Batterieblocks herstellbar ist,
- ein Federelement, das das Verbindungselement in Richtung einer Verbindung der Innenwand des Batteriefachs mit der Außenwand des Batterieblocks mit Kraft beaufschlagt,
- ein lösbares Rastelement, das in eingerastetem Zustand eine Bewegung des Verbindungselements in Richtung eines Lösens der Verbindung der Innenwand des Batteriefachs mit der Außenwand des Batterieblocks verhindert und das in gelöstem Zustand eine Bewegung des Verbindungselements in Richtung eines Lösens der Verbindung der Innenwand des Batteriefachs mit der Außenwand des Batterieblocks ermöglicht.

Zum Durchführen eines Batteriewechsels wird das Rastelement des Batteriespanners gelöst und das Verbindungselement wird durch eine manuell oder mittels einer geeigneten Vorrichtung erzeugten Lösekraft in einer Position gehalten, in der der Batterieblock innerhalb des Batteriefachs frei bewegbar ist. Wenn sich der Batterieblock in seiner endgültigen Position befindet, wird keine Lösekraft mehr auf das Verbindungselement ausgeübt, woraufhin das Federelement das Verbindungselement in eine Position bewegt, in der es die Außenwand des Batterieblocks mit der Innenwand des Batteriefachs verbindet. Das Rastelement wird eingerastet, sodass sich das Verbindungselement nicht mehr zurückbewegen kann. Bei einer möglicherweise auftretenden geringfügigen Bewegung des Batterieblocks innerhalb des Batteriefachs stellt sich das Verbindungselement gegebenenfalls automatisch nach und rastet erneut ein.

Zweckmäßigerweise ist an zwei gegenüberliegenden Seiten des Batterieblocks jeweils mindestens ein Batteriespanner angeordnet. Der Batterieblock ist dann zwischen den beiden gegenüberliegenden Batteriespannern eingespannt.

Gemäß einer möglichen Ausgestaltungsform ist das Rastelement von einer mechanischen Anordnung gebildet. Als mechanische Anordnung kommt beispielsweise eine herkömmliche Ratschenanordnung in Betracht.

Ebenfalls möglich ist es, dass das Rastelement von einer hydraulischen Anordnung gebildet ist. Die hydraulische Anordnung kann dabei einen Hydraulikzylinder und ein entsperrbares Rückschlagventil umfassen.

Gemäß einer Weiterbildung der Erfindung erfolgt das Umschalten des Rastelements zwischen dem gelösten und dem eingerasteten Zustand mittels eines Stellglieds. Dieses Stellglied kann mechanisch, elektrisch, pneumatisch oder hydraulisch ausgeführt sein und wird manuell oder automatisch angesteuert.

Eine besonders vorteilhafte Weiterbildung der Erfindung liegt vor, wenn das Stellglied mit einer Verstellvorrichtung für eine Lenksäule in Wirkverbindung steht. Das Rastelement wird durch das Stellglied automatisch dann gelöst, wenn eine Bedienperson die Lenksäule in eine Außerbetriebsposition bewegt.

Eine gleichermaßen zweckmäßige Weiterbildung liegt vor, wenn das Stellglied mit einer Betätigungsvorrichtung für eine Feststellbremse in Wirkverbindung steht. In diesem Fall wird das Rastelement durch das Stellglied automatisch dann gelöst, wenn die Feststellbremse des Flurförderzeugs betätigt wird.

Weitere Vorteile und Einzelheiten der Erfindung werden anhand des in der schematischen Figur dargestellten Ausführungsbeispiels erläutert.

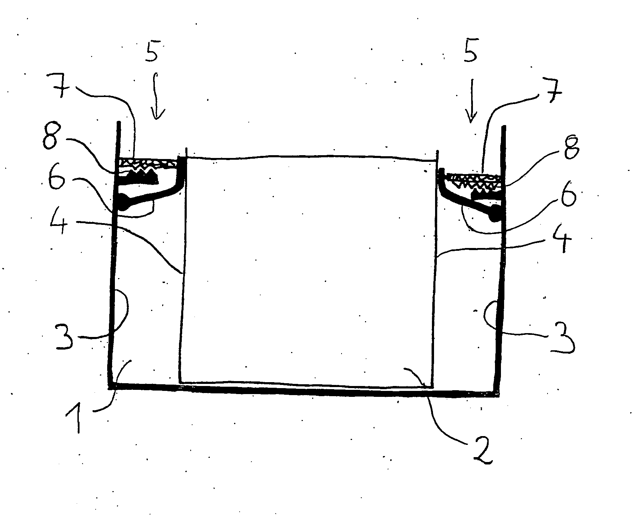

Die Figur zeigt ein Batteriefach 1 eines Flurförderzeugs mit einem innerhalb des Batteriefachs 1 angeordneten Batterieblock 2. Der Abstand der Innenwände 3 des Batteriefachs 1 ist größer als der Abstand der Außenwände 4 des Batterieblocks 2. Ein Verrutschen des Batterieblocks 2 innerhalb des Batteriefachs 1 während des Betriebs des Flurförderzeugs muss verhindert werden.

Zu diesem Zweck ist an beiden Innenwänden 3 des Batteriefachs jeweils ein Batteriespanner 5 angeordnet. Jeder Batteriespanner 5 umfasst ein Verbindungselement 6, das an der Innenwand 3 gelenkig gelagert ist. Ein Federelement 7 drückt das Verbindungselement 6 an den Batterieblock 2 an. Darüber hinaus weist jeder Bätteriespanner ein im vorliegenden Ausführungsbeispiel mechanisch ausgeführtes Rastelement 8 auf, welches im dargestellten eingerasteten Zustand eine Bewegung des Verbindungselements 6 zum Batterieblock 2 hin ermöglicht, jedoch eine Bewegung des Verbindungselements 6 vom Batterieblock 2 weg verhindert.

## Patentansprüche

1. Flurförderzeug mit einem Batteriefach (1) und einem in dem Batteriefach (1) angeordneten Batterieblock (2), wobei in zumindest einer horizontalen Richtung die Innenabmessung des Batteriefachs (1) größer ist als die Außenabmessung des Batterieblocks (2), wobei mindestens ein Batteriespanner (5) vorgesehen ist, der in einem Zwischenraum zwischen einer Innenwand (3) des Batteriefachs (1) und einer Außenwand (4) des Batterieblocks (2) angeordnet ist, **dadurch gekennzeichnet, dass** der Batteriespanner (5) folgende Elemente aufweist:
- ein bewegliches Verbindungselement (6), mit dem eine zur Übertragung von Druckkräften geeignete mechanische Verbindung zwischen der Innenwand (3) des Batteriefachs (1) und der Außenwand (4) des Batterieblocks (2) herstellbar ist,
- ein Federelement (7), das das Verbindungselement (6) in Richtung einer Verbindung der Innenwand (3) des Batteriefachs (1) mit der Außenwand (4) des Batterieblocks (2) mit Kraft beaufschlagt,
- ein lösbares Rastelement (8), das in eingerastetem Zustand eine Bewegung des Verbindungselements (6) in Richtung eines Lösens der Verbindung der Innenwand (3) des Batteriefachs (1) mit der Außenwand (4) des Batterieblocks (2) verhindert und das in gelöstem Zustand eine Bewegung des Verbindungselements (6) in Richtung eines Lösens der Verbindung der Innenwand (3) des Batteriefachs (1) mit der Außenwand (4) des Batterieblocks (2) ermöglicht.

2. Flurförderzeug nach Anspruch 1, **dadurch gekennzeichnet, dass** an zwei gegenüberliegenden Seiten des Batterieblocks (2) jeweils mindestens ein Batteriespanner (5) angeordnet ist.

3. Flurförderzeug nach Anspruch 1 oder 2, **dadurch gekennzeichnet, dass** das Rastelement (8) von einer mechanischen Anordnung gebildet ist.

4. Flurförderzeug nach Anspruch 1 oder 2, **dadurch gekennzeichnet, dass** das Rastelement (8) von einer hydraulischen Anordnung gebildet ist.

5. Flurförderzeug nach einem der Ansprüche 1 bis 4, **dadurch gekennzeichnet, dass** das Umschalten des Rastelements (8) zwischen dem gelösten und dem eingerasteten Zustand mittels eines Stellglieds erfolgt.

6. Flurförderzeug nach Anspruch 5, **dadurch gekennzeichnet, dass** das Stellglied mit einer Verstellvorrichtung für eine Lenksäule in Wirkverbindung steht.

7. Flurförderzeug nach Anspruch 5, **dadurch gekennzeichnet, dass** das Stellglied mit einer Betätigungsvorrichtung für eine Feststellbremse in Wirkverbindung steht.

## Claims

1. Industrial truck with a battery compartment (1) and a battery pack (2) arranged in the battery compartment (1), the internal dimension of the battery compartment (1) being larger than the external dimension of the battery pack (2) in at least one horizontal direction, at least one battery tensioning device (5) being provided, which is arranged in an intermediate space between an inner wall (3) of the battery compartment (1) and an outer wall (4) of the battery pack (2), **characterized in that** the battery tensioning device (5) has the following elements:
- a movable connection element (6) which can be used to produce a mechanical connection, which is suitable for transmitting compression forces, between the inner wall (3) of the battery compartment (1) and the outer wall (4) of the battery pack (2),
- a spring element (7), which applies force to the connection element (6) in the direction of a connection of the inner wall (3) of the battery compartment (1) to the outer wall (4) of the battery pack (2),
- a releasable latching element (8), which, in the latched-in state, prevents a movement of the connection element (6) in the direction of a release of the connection between the inner wall (3) of the battery compartment (1) and the outer wall (4) of the battery pack (2) and which, in the released state, allows a movement of the connection element (6) in the direction of a release of the connection between the inner wall (3) of the battery compartment (1) and the outer wall (4) of the battery pack (2).

2. Industrial truck according to Claim 1, **characterized in that** in each case at least one battery tensioning device (5) is arranged on two opposite sides of the battery pack (2).

3. Industrial truck according to Claim 1 or 2, **characterized in that** the latching element (8) is formed by a mechanical arrangement.

4. Industrial truck according to Claim 1 or 2, **characterized in that** the latching element (8) is formed by a hydraulic arrangement.

5. Industrial truck according to one of Claims 1 to 4, **characterized in that** the latching element (8) is switched over between the released state and the latched-in state by means of an actuator.

6. Industrial truck according to Claim 5, **characterized in that** the actuator is operatively connected to an adjusting apparatus for a steering column.

7. Industrial truck according to Claim 5, **characterized in that** the actuator is operatively connected to an actuating apparatus for a handbrake.

## Revendications

1. Chariot de manutention comprenant un compartiment de batterie (1) et un bloc-batterie (2) disposé dans le compartiment de batterie (1), la dimension intérieure du compartiment de batterie (1), au moins dans une direction horizontale, étant supérieure à la dimension extérieure du bloc-batterie (2), au moins un dispositif de fixation de batterie (5) étant prévu, lequel est disposé dans un espace intermédiaire entre une paroi interne (3) du compartiment de batterie (1) et une paroi externe (4) du bloc-batterie (2), **caractérisé en ce que** le dispositif de fixation de batterie (5) présente les éléments suivants :
- un élément de connexion mobile (6), avec lequel une connexion mécanique appropriée au transfert des forces de pression peut être établie entre la paroi interne (3) du compartiment de batterie (1) et la paroi externe (4) du bloc-batterie (2),
- un élément de ressort (7) qui sollicite par une force l'élément de connexion (6) dans la direction d'une connexion de la paroi interne (3) du compartiment de batterie (1) à la paroi externe (4) du bloc-batterie (2),
- un élément d'encliquetage détachable (8), qui empêche, dans l'état encliqueté, un déplacement de l'élément de connexion (6) dans la direction d'une libération de la connexion de la paroi interne (3) du compartiment de batterie (1) à la paroi externe (4) du bloc-batterie (2), et qui permet, dans l'état libéré, un déplacement de l'élément de connexion (6) dans la direction d'une libération de la connexion de la paroi interne (3) du compartiment de batterie (1) à la paroi externe (4) du bloc-batterie (2).

2. Chariot de manutention selon la revendication 1, **caractérisé en ce qu'**à chaque fois au moins un dispositif de fixation de batterie (5) est disposé sur deux côtés opposés du bloc-batterie (2).

3. Chariot de manutention selon la revendication 1 ou 2, **caractérisé en ce que** l'élément d'encliquetage (8) est formé par un dispositif mécanique.

4. Chariot de manutention selon la revendication 1 ou 2, **caractérisé en ce que** l'élément d'encliquetage (8) est formé par un dispositif hydraulique.

5. Chariot de manutention selon l'une quelconque des revendications 1 à 4, **caractérisé en ce que** la commutation de l'élément d'encliquetage (8) entre l'état libéré et l'état encliqueté s'effectue au moyen d'un actionneur.

6. Chariot de manutention selon la revendication 5, **caractérisé en ce que** l'actionneur est en liaison fonctionnelle avec un dispositif de réglage pour une colonne de direction.

7. Chariot de manutention selon la revendication 5, **caractérisé en ce que** l'actionneur est en liaison fonctionnelle avec un dispositif d'actionnement pour un frein de service.
